# EUROPEAN PATENT APPLICATION

(11) **EP 4 429 056 A1**
(43) Date of publication of application: **11.09.2024**
(21) Application number: 23382214.7
(22) Date of filing: 07.03.2023
(51) Int. Cl.: H02H 9/00, H02J 3/18

(54) **DAMPING DEVICE FOR MITIGATING TRANSIENTS DURING CAPACITIVE LOAD CONNECTION**

(71) Applicant: Arteche Centro de Tecnologia, A.I.E., 48100 Munguia (Vizcaya) (ES)
(72) Inventor: Chacón Matteo, Juan Andrés, 48100 Munguia (BIZKAIA) (ES); Zarate Jotar, Alejandro, 48100 Munguia (BIZKAIA) (ES)
(74) Representative: Balder IP Law, S.L.

(57) **Abstract**

The invention refers to a damping device for mitigating transients during capacitive load connection. The damping device comprises: two connection terminals for connecting the damping device to an external circuit, first and second switching devices connected in series between the two connection terminals, at least one resistor connected in parallel to the second switching device, a controller adapted for switching on and off the first and second switching devices, wherein the controller is adapted such that for switching on the damping device, the first switching device is switched on in advance to the second switching device, and after a predefined delay time, the second switching device is switched on to by-pass current circulation through the resistor.

## Description

### TECHNICAL FIELD

The present invention relates in general to techniques for damping or mitigating voltage and current transients while connecting capacitive loads.

An object of the invention is the provision of a cost-effective damping device for mitigating voltage and current transients while connecting capacitive loads using pre-insertion resistors, that minimizes size and costs of the pre-insertion resistor.

### STATE OF THE ART

Capacitor banks are typically connected to the electric grid mainly to compensate reactive power and correct power factor.

The connection of a capacitive load generates a transient of both current and voltage. Transient overvoltage increase the stress on the insulation of equipment connected to an electrical system, decrease its lifetime or even cause failure of overvoltage-sensitive elements.

The maximum current reached during energisation depends on the instant of connection, the short-circuit power (inductance), the capacity of the load and whether or not other capacitive loads are connected and their capacity. On the other hand, the voltage, in the absence of damping resistors can reach up to 2 times the maximum voltage level of the waveform.

Currently, the two most widely used transient mitigation methods for capacitive loads are: Point of Wave (PoW) or zero crossing, and the use of pre-insertion resistors.

The (PoW) controls the point of the wave at which the closures of each of the poles of the switching element occur, so that the voltage difference between the source side and the load side (capacitor) is minimal.

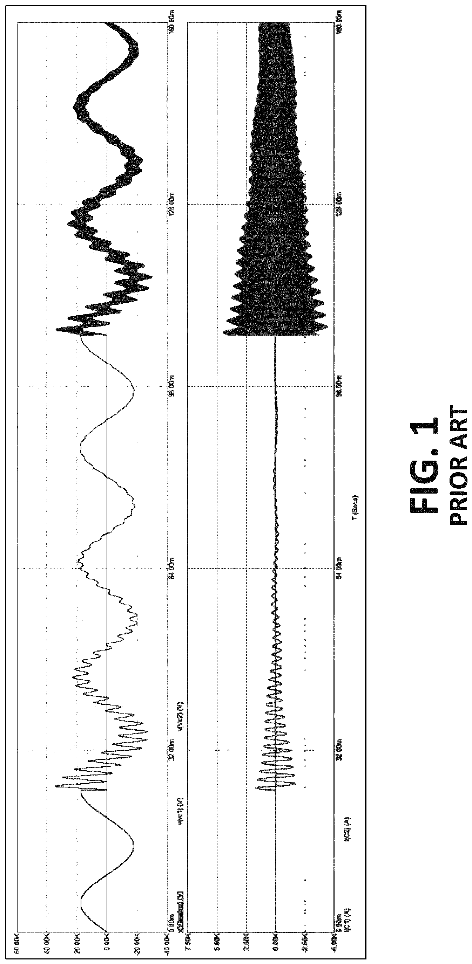

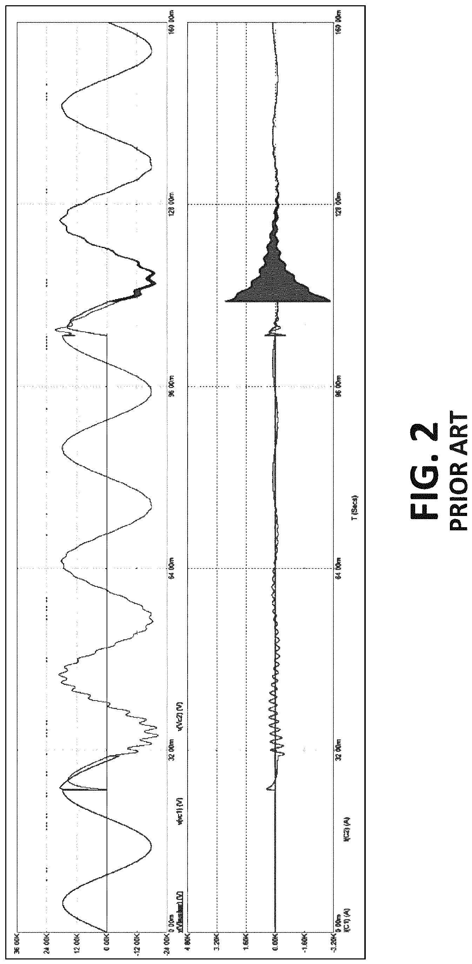

A pre-insertion resistor is a resistor that is connected in series with the capacitive load (and other types of loads) to mitigate switching transients. **Figure 1** shows a graph of voltage (top) and current (bottom) during energisation of a capacitive load according to the prior art (on the left, connection without capacitive loads present, on the right, connection when another capacitive load is connected, back-to-back effect). **Figure 2** shows the waveforms obtained by connecting the same capacitive loads as in **Figure 1****,** but using a pre-insertion resistor

Commonly, pre-insertion resistors need to dissipate large amount of energy, thus, they could have a big size and could be quite expensive depending of the application.

A known commercial product sold under the trademark (CapSwitcher ^{®}), is a disconnector to connect capacitor banks to the grid, which has a pole which in a mechanical movement produces first the closing through the resistor and then its bypass. This product requires a specially designed switching device, which is expensive and it is based on a complex bidirectional toggle mechanism.

A disconnector of this type is described in the U.S. patent US-7.745.753 B1.

### DESCRIPTION OF THE INVENTION

The invention refers to a transients damping device, that comprises two switching devices and a pre-insertion resistor connected in such a manner, that the switching devices can be opened and closed in a coordinated manner, in a way that during a transient period when a capacitive load is being connected to an external circuit, current flows through one of the switching devices and through the pre-insertion resistor which mitigates current and voltage transients during the transient period, and when the capacitive load reaches a permanent operating regime, then the resistor is short-circuited by the other switching device.

The coordination of both switching devices, is carried out by means of a controller that sends closing and opening signals to both switches at defined time intervals to perform transient mitigation.

More specifically, the invention refers to a damping device for mitigating transients while connecting a capacitive load, for example to the grid, wherein the damping device comprises:
two connection terminals for connecting the damping device to an external circuit,
a first switching device and a resistor connected in series between the two connection terminals, and
a second switching device connected as to by-pass the resistor, for example connected in parallel to the resistor alone or in parallel to the set formed by the first switching device and the resistor connected in series.

Alternatively, instead of as single resistor, a set of resistors connected in series or in parallel, can be connected to the second resistor.

The damping device further comprises a controller adapted for switching on and off the first and second switching devices.

The controller is adapted such that for switching on the damping device to allow current circulation between the two connection terminals, the first switching device is switched on in advance to the second switching device, that is, the first switching device is closed while the second switching device is kept open, so that current can circulate through the first switching device and the resistor.

The controller is further adapted such that after a predefined delay time, the second switching device is also switched on (closed) to by-pass current circulation through the resistor, thus, current can circulate through the first and second switching devices or through the second switching device, and no current would circulate through the resistor.

According to the invention, the resistor insertion time which is defined as the time period during which current is circulating through the resistor to mitigate a transient, is to be minimized in order to also minimize power dissipation in the resistor, and in turn minimize size and cost of the resistor.

The resistor insertion time is minimized to the extent, that the resistor insertion time is shorter than the closing time of the first and second switching devices, wherein the closing time can be defined as the time that takes for each one of the first and second switching devices, to actually close after receiving a command from the controller to switch off. For example, the resistor insertion time may be around 10 ms, whereas the closing time of each one of the first and second resistor is typically around 70 ms.

Therefore, in order to achieve the desired insertion time, the controller sends closing signals for first and second switching devices to close, with a delay time which is equal to the resistor insertion time.

This way of operating the first and second switching devices makes possible to execute both closing operations with a very short time interval, but large enough to obtain the benefit of transient mitigation and small enough to minimise the size of the resistor (power dissipation). Otherwise, the resistor would need to dissipate a lot of power and have a large size, so the resistor would be extremely costly.

Because both closing signals or orders are sent before knowing if the first switching device has actually closed correctly, the status of the first and second switching devices are monitored to verify that the switching is correct. If not, the status of the switches is corrected to avoid overheating of the resistor.

In a preferred embodiment of the invention, the damping device further comprises error detection means communicated with the controller, wherein the error detection means are adapted to detect the state on/off of the first and second switching devices.

The error detection means are further adapted such that during the switching on operation of the damping device, if it is detected that the second switching device is not switched on after a predefined time after a command to switch on has been sent to it, then the controller order the first and second switching devices to switch off to prevent current circulation through the damping device.

Additionally, to disconnect a load from an external circuit, the controller is adapted to perform the opening process of the damping device, by first switching off the first switching device (keeping the second switching device closed bypassing the resistor), so that the resistor does not participate during the opening operation. For this, the first switching device must be capable of performing capacitive load switching.

Once the first switching device is opened (the capacitive load is de-energised), the second switching device is switched off so that the second switching device and the resistor, are ready to perform the next closing operation.

Preferably, the first and second switching devices are implemented as commercially available circuit breakers or capacitor switches.

Another aspect of the invention, refers to an electric installation comprising a capacitive load and the damping device previously defined, connected in series to the capacitive load.

The capacitive load may consist of a capacitor bank for reactive power compensation, or it may consist of a harmonic filter.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1: shows a graph of voltage (top) and current (bottom) during energisation of a capacitive load according to the prior art (on the left, connection without capacitive loads present, on the right, connection when another capacitive load is connected, back-to-back effect).
Figure 2: shows a graph of voltage (top) and current (bottom) during energisation of a capacitive load according to the prior art (on the left, connection without capacitive loads present, on the right, connection when another capacitive load is connected, back-to-back effect) using pre-insertion resistor.
Figure 3.- shows in figure A a electric diagram of the damping device of the invention, and in figure B another electric diagram with an alternative connection.
Figure 4.- shows a sequence of the operation of the damping device of the invention: open state (drawing A), pre-insertion state (drawing B) and permanent conduction state (drawing C).
Figure 5.- shows several graphs illustrating the connection sequence of the switching devices.

### PREFERRED EMBODIMENTS OF THE INVENTION

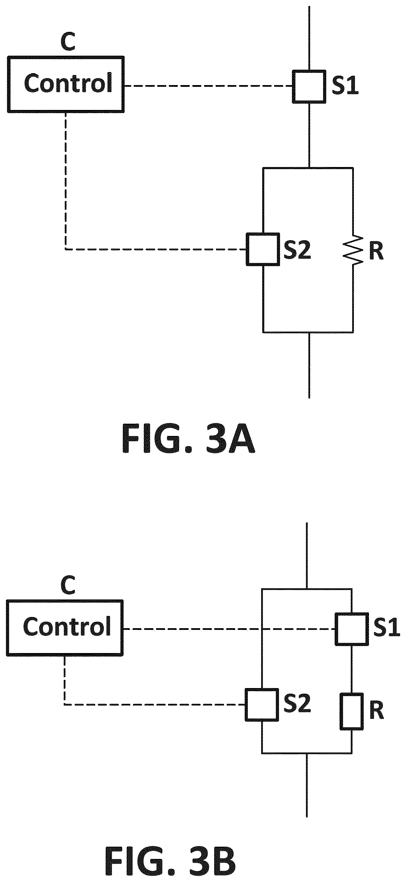

As represented in the embodiment of **Figure 3A** the damping device (1) of the invention, comprises two connection terminals (2,3) for connecting the damping device to an external circuit, and a first switching device (S1) and a resistor (R ) connected in series between the two connection terminals (2,3).

Furthermore, the damping device (1) includes a second switching device (S2) connected in parallel to the resistor (R ), and a controller (C) adapted for switching on and off the first and second switching devices (S1,S2).

The alternative embodiment of **Figure 3B** has the same components of **Figure 3A****,** but the second switching device (S2) is connected in parallel with the set formed by the first switching device (S1) and the resistor (R ) connected in series.

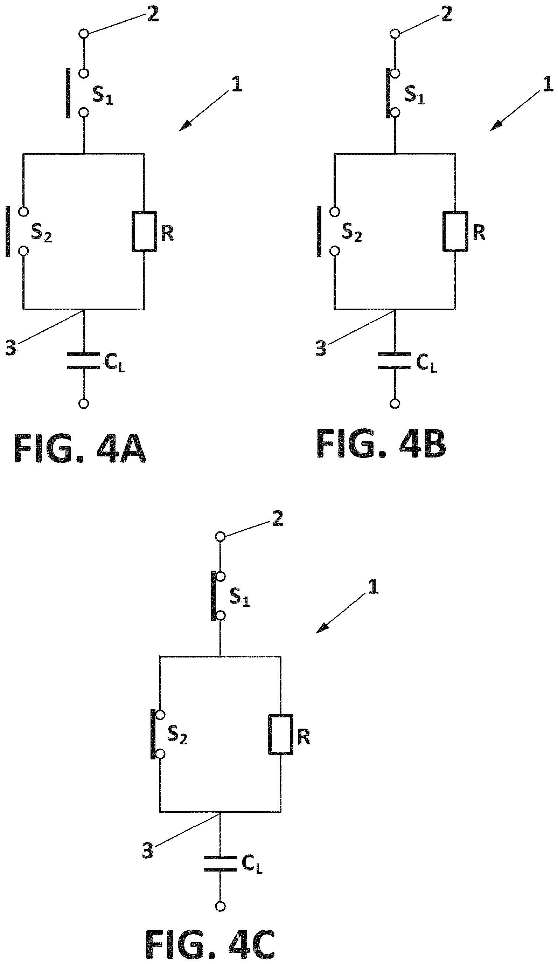

An operation of the damping device (1) for mitigating transients when connecting a capacitive load (C_{L}), is illustrated in the connection sequence of **Figures 4A** - **4C****.**

The controller (C) is adapted such that for switching on the damping device (1), to electrically connect a Capacitive load (C_{L}) such as a harmonic filter or a capacitive bank, first, the first switching device (S1) is switched on while the second switching device (S2) is kept open **(****Figure 4B****),** so that current would flow through the first switching device (S1) and the resistor (R).

After a predefined delay time (resistor (R) insertion time), the controller (C) switch on or close the second switching device (S2) which by-pass current circulation through the resistor (R), so now current can flow through the first and second switching devices (S1, S2), thereby connecting directly a Capacitive load (C_{L}) to an external circuit in a permanent regime.

The closing time of each of the first and second switching elements (S1,S2), is longer than the desired insertion time (time during which current flow through the resistor) to allow for a practical resistor size (Table 1).

The insertion time determines how much energy is dissipated in the resistor (R) at each switching on operation of the damping device, and this energy determines how much material should be used in the resistor.

**Table 1:**

| **Description** | **Symbol** | **Value** |
|---|---|---|
| Closing time (S1,S2) | TC | 70 ms |
| Opening time (S1,S2) | TA | 50 ms |
| Insertion time | TI | Aprox. 10 ms |

If the second switching device (S2) closing order, is sent right after the first switching device (S1) close occurs, even if the second switching device (S2) close order is sent just after the first switching device (S1) close occurs, the minimum resistance insertion time TI would be equal to TC. For this reason, the two closing orders are sent out with a delay by a time TRP (Programmed Delay Time) in order to obtain a desired Tl.

Note that TI is not equal to TRP due to the dispersion of the TC and TA times of both switching devices (S1,S2), i.e. the actual closing and opening times of each switching devices (S1,S2) has a random error.

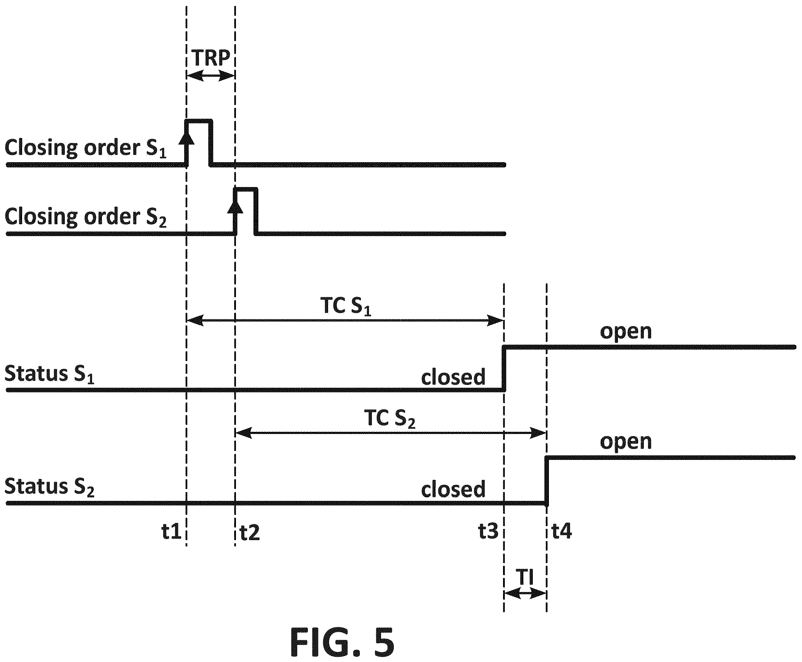

**Figure 5** shows several graphs illustrating the connection sequence of the first and second switching devices (S1, S2). The order to close (S1) is sent at time (t1) and after the (TRP) (Programmed Delay Time), at time (t2) the order to close (S2) is sent. After the closing time (TC1) of (S1) the first switching device closes at time (t3) so that current would flow through the resistor (R ), and after the closing time (TC2) of (S2) the second switching device closes at time (t4) by passing the resistor (R). The resistor insertion time is the time between (t3) and (t4), which is equal to the difference between (t1) and (t2) plus the time discrepancies that can cause the real closing times of each switching device.

Sending the closing orders of both switching devices (S1,S2) involves confirming that the operation has been carried out correctly. In particular, the condition to be avoided is that first switching device (S1) closes (by connecting the resistor) and second switching device (S2) does not close, so that the resistor is not by-passed. This condition would mean that the resistor would be connected in series with the load, which would cause current close to the rated current of the load, to circulate through it permanently, which would consequently cause the resistor to exceed its design parameters and be destroyed.

Therefore, the control, in addition to sending the closing signals with a time delay or time lag, initiates at the same time an operation verification logic (closing error detection), which if after a defined time TDEC (Closing Error Detection Time), detects a Close Error, another logic (Open Logic) is executed which sends open commands to both switching devices (S1,S2), in order to open the circuit and de-energise the resistor.

In addition, the opening operations are also supervised and if an error is detected, the control sends a signal indicating a system fault, which can be used to actuate an upstream breaker system.

The control also incorporates additional Supervisory Logic to prevent system malfunction. This logic monitors the states of the switching elements and if they enter a forbidden state for more than a defined time, it executes the Open Logic. This prevents the user from causing a system malfunction, for example, if a user manually executes the opening of the second switching device (S2), the resistor would be energised. The system automatically corrects that state through the Supervisory Logic.

Regarding the resistance (R), its ohmic value is chosen so as to minimise the load connection transient. The optimum resistance is found when both transients are minimised, the one produced by the first switching device (S1) closing and the one produced by the second switching device (S2) closing. This value is found through analytical calculations or simulations.

The energy dissipated by the resistor (R) depends on the time it is inserted, which is also chosen so as to minimise the switching transients. In addition, the number of consecutive operations to be allowed (re-closures) multiplies the value of that energy. Therefore, the energy dissipated by the resistor is defined by the insertion time and the number of consecutive reclosures.

The controller (C ) also performs thermal protection of the resistor (R ). Since the energy dissipated by the resistor in each operation is known, and the construction parameters of the resistor are also known, the temperature difference by which its temperature will rise in each operation, and the time it will take to cool down (cooling constant) is also known. By means of a thermal model of the heater, the control estimates the temperature in the heater and thereby limits the number of operations available at each instant based on the current temperature, the temperature increase in each operation and the maximum temperature supported by the heater.

The switching devices (S1, S2) can be tested circuit breakers suitable for the operation of capacitive loads, or disconnectors for capacitive loads (capacitor switches).

The actual closing (TC) and opening (TA) times switching devices (S1, S2), are characterised in order to quantify their dispersion.

The resistor (R) is sized to have the desired ohmic value, dissipate the desired power and withstand the voltage between its terminals during switching.

The controller (C ) must be able to implement the above-described logics, send the closing and opening signals to the switching devices (S1 ,S2) and receive their states.

The controller (C ) is adapted to perform the opening process of the damping device (1), by first switching off the first switching device (S1) to interrupt current circulation through the resistor (R), and once the first switching device (S1) is opened, then the second switching device (S2) is switched off.

## Claims

1. Damping device for mitigating transients during capacitive load connection, comprising:
two connection terminals for connecting the damping device to an external circuit,
a first switching device and a resistor connected in series between the two connection terminals, and
a second switching device connected as to by-pass the resistor,
a controller adapted for switching on and off the first and second switching devices,
wherein the controller is adapted such that for switching on the damping device, the first switching device is switched on in advance to the second switching device, and after a predefined delay time, the second switching device is switched on to by-pass current circulation through the resistor.

2. Damping device according to claim 1, wherein the second switching device is connected in parallel to the resistor or in parallel to the first switching device and the resistor.

3. Damping device according to claim 1, wherein the predefined delay time, is the resistor insertion time, which is a time period during which current circulate through the resistor.

4. Damping device according to claim 1, wherein the resistor insertion time is shorter than the closing time of the first switching device and shorter than the closing time of the first switching device, wherein the closing time is the time that the switching devices take to actually closing after receiving an order to close.

5. Damping device according to any of the preceding claims, further comprising error detection means communicated with the controller, and adapted to detect the state on/off of the first and second switching devices.

6. Damping device according to claim 5, wherein the error detection means are further adapted such that during the switching on operation of the damping device, if it is detected that the second switching device is not switched on after a predefined time after a command to switch on has been sent to it, then the controller order the first and second switching devices to switch off to prevent current circulation through the damping device.

7. Damping device according to any of the preceding claims, wherein the first and second switching devices are circuit breakers or capacitor switches.

8. Damping device according to any of the preceding claims, wherein the controller is adapted such that for switching off the damping device, the first switching device is first switched off while the second switching device is kept closed, and once the first switching device is opened, then the second switching device is switched off.

9. Damping device according to claim 3, wherein resistor insertion time is within the range 5 - 50 ms, and preferably 10 ms.

10. Electric installation comprising a capacitive load and the damping device defined in any of the preceding claims, connected in series to the capacitive load.

11. Electric installation according to claim 10, wherein the capacitive load is a capacitor bank, and the electric installation is adapted for reactive power compensation.

12. Electric installation according to claim 10, wherein the capacitive load is a harmonic filter.
